# EUROPÄISCHE PATENTANMELDUNG

(11) **EP 2 368 732 A2**
(43) Veröffentlichungstag der Anmeldung: **28.09.2011**
(21) Anmeldenummer: 11156995.0
(22) Anmeldetag: 04.03.2011
(51) Int. Cl.: B60H 1/00

(54) **Mischmodul für eine Heizungs-, Belüftungs- und/oder Klima-Anlage**

(30) Priorität: 15.03.2010 DE 102010002858
(71) Anmelder: Behr GmbH & Co. KG, 70469 Stuttgart (DE)
(72) Erfinder: Venezia, Vincenzo, 71093, Weil im Schönbuch (DE)
(74) Vertreter: Grauel, Andreas

(57) **Zusammenfassung**

Für ein Mischmodul (4) für eine Heizungs-, Belüftungs- und/oder Klima-Anlage, welche einen Mischraum zur Durchmischung zweier Luftströme (L1, L2) unterschiedlicher Temperatur aufweist ist für eine optimale Durchmischung beider Luftströme vorgesehen, dass das Mischmodul (4) mehrere, im wesentlichen parallel zueinander verlaufende Rinnen (5) aufweist und so ausgebildet und in dem Mischraum anordbar ist, dass
- die offenen Längsseiten der Rinnen (5) in Abströmrichtung in den Mischraum ragen,
- ein erster der Luftströme (L1) auf die geschlossenen Längsseiten der Rinnen (5) führbar ist
- und ein zweiter der Luftströme (L2) von wenigstens einem Ende der Rinnen (5) in diese einblasbar ist.

## Beschreibung

Die Erfindung betrifft ein Mischmodul für eine Heizungs-, Belüftungs- und/oder Klima-Anlage, Welche einen Mischraum zur Durchmischung zweier Luftströme unterschiedlicher Temperatur aufweist.

Für Klimaanlagen, insbesondere in Fahrzeugen, wird immer weniger Bauraum zur Verfügung gestellt. Gleichzeitig steigen die Anforderungen an die Temperaturregelung und Temperaturschichtung. Bei bekannten Anlagen der eingangs genannten Art wird versucht, die Temperaturregelung und Schichtung mit Hilfe von Luftleitkanälen sowie Kalt- und Warmkanälen zu erreichen.

Die dafür notwendigen Leitteile in den Kanälen der Klimaanlage verursachen jedoch in den meisten Fällen hohe Druckverluste und verringern die Leistung der Klimaanlage. Dennoch wird oftmals nicht eine gewünschte Gleichmäßigkeit der Temperatur in durchmischten Strömen erreicht. Außerdem treten akustisch negative Effekte auf.

Es ist Aufgabe der Erfindung, für eine Anlage der eingangs genannten Art ein Mischmodul anzugeben, welches es gestattet, zwei Luftströme mit unterschiedlichen Temperaturen in kleinem Bauraum optimal zu durchmischen.

Diese Aufgabe ist erfindungsgemäß durch ein Mischmodul für einen Mischraum gelöst, welches mehrere, im Wesentlichen parallel zueinander verlaufende Rinnen aufweist und so ausgebildet und in den Mischraum anordbar ist, dass
- die offenen Längsseiten der Rinnen in Abströmrichtung in den Mischraum ragen,
- ein erster der Luftströme auf die geschlossenen Längsseiten der Rinnen führbar ist
- und ein zweiter der Luftströme von wenigstens einem Ende der Rinnen in diese einblasbar ist.

Das erfindungsgemäße Mischmodul ist für den Einsatz in einem Mischraum einer Heizungs-, Belüftungs- und/oder Klima-Anlage vorgesehen, in welchem wenigstens zwei Luftströme verschiedener Temperatur aufeinandertreffen. In bekannten Anlagen werden derartige Luftströme, beispielsweise in einem relativen Winkel von 90°, aufeinander zugeführt. Es entsteht teilweise eine Verwirbelung, jedoch ist die Durchmischung des abstromseitigen Luftstroms nicht optimale, so dass sich in diesem kältere und wärmere Luftschichten befinden.

Das erfindungsgemäße Mischmodul ist in einen solchen Mischraum einsetzbar. Es weist länglich verlaufende V-förmige Rinnen auf, die in den Mischraum ragen. Die Rinnen sind möglichst strömungsgünstig für einen ersten Luftstrom ausgebildet, der quer zur Längserstreckungsrichtung der Rinnen auf die geschlossenen Längsseiten der Rinnen führbar ist Dieser erste Luftstrom trifft also quasi von hinten auf die Rinnen und wird zwischen den Rinnen hindurchgeführt.

Ein zweiter Luftstrom ist von einem Ende der Rinnen her in die Rinnen führbar bzw. in diese einblasbar. Somit wird dieser zweite Luftstrom zunächst in den Rinnen geführt und wird im weiteren Verlauf der Rinnen in dem Sog, der durch den ersten Luftstrom entsteht, aus den Rinnen herausgeführt und mit dem ersten Luftstrom vermischt.

Somit entsteht fast im gesamten Längenbereich der Rinnen eine Vermischung des ersten und des zweiten Luftstroms. Es wird die Kontaktfläche zwischen kalter und warmer Luft, also zwischen den beiden Luftströmen verschiedener Temperatur, durch das erfindungsgemäße Mischmodul gegenüber konventionellen Anordnungen um ein Vielfaches vergrößert, wodurch die Durchmischung deutlich verbessert bzw. beschleunigt wird.

Das erfindungsgemäße Mischmodul benötigt wenig Bauraum, was insbesondere für Klimaanlagen in Fahrzeugen von Bedeutung ist. Es ist universell einsetzbar und reduziert somit die Entwicklungskosten. Die Temperatursträhnigkeit in dem gemischten Luftstrom wird deutlich verringert.

Die Wirkung des erfindungsgemäßen Mischmoduls bzw, dessen Rinnen kann vorteilhaft, wie nach Ausgestaltung der Erfindung vorgesehen ist, dadurch weiter verbessert werden, dass die Rinnen in Abströmrichtung parabelförmig gekrümmt ausgeblidet sind, vorzugsweise in einem Gesamtwinkel von etwa 10 Grad. Durch diese parabelförmige Krümmung kann das Abströmen des zweiten Luftstroms aus den Rinnen verbessert werden; ferner wird der Luftwiderstand für den ersten Luftstrom verringert.

Die Wirkung des Mischmoduls kann vorteilhaft, wie nach einer weiteren Ausgestaltung der Erfindung vorgesehen ist, dadurch verbessert werden, dass das Mischmodul auf der Seite, auf der der zweite Luftstrom in die Rinnen einblasbar ist, zwischen den Rinnen angeordnete V-förmige Trägerelemente aufweist, welche zu den Rinnen hin geöffnet sind und den zweiten Luftstrom in die Rinnen lenken.

Die Trägerelemente können einerseits als Träger der Rinnen dienen. Sie sind jedoch auch für die Luftführung beider Luftströme optimal. Der erste Luftstrom ist durch die V-förmige Ausbildung nahezu luftwiders-Landsfrei durch die Trägerelemente führbar. Der zweite Luftstrom wird durch die V-förmige Ausbildung auf die Vertiefungen der Rinnen geführt, was für die Wirkung der Rinnen zur Durchmischung der beiden Luftströme optimal ist.

Die Rinnen können zur optimalen Raurnausnutzung gegebenenfalls, wie gemäß einer weiteren Ausgestaltung der Erfindung vorgesehen ist, zu ihrer Befestigungsseite hin, also zu der Seite des Mischmoduls hin, an der der zweite Luftstrom einblasbar ist, verjüngt ausgebildet sein. Somit können sie an dem anderen Ende, das in den ersten Luftstrom ragt, etwas breiter ausgebildet sein, wodurch die Vermischung der Luftströme weiter verbessert wird.

Nachfolgend wird ein Ausführungsbeispiel der Erfindung anhand der Zeichnungen näher erläutert. Es zeigen:
Fig. 1 eine quasi-transparente Ansichtsdarstellung eines Ausschnitts einer Heizungs-, Belüftungs- und/oder Klima-Anlage gemäß dem Stand der Technik, in welchem zwei Luftströme unterschiedlicher Temperatur aufeinandertreffen,
Fig. 2 eine Darstellung gemäß Fig. 1, jedoch mit einem erfindungsgemäßen Mischmodul,
Fig. 3 einen Ausschnitt der Darstellung gemäß Fig. 2, der in vergrößerter Darstellung die Mischwirkung des Mischmoduls zeigt,
Fig. 4 eine Ansicht eines erfindungsgemäßen Mischmoduls,
Fig. 5 einen Querschnitt durch das Mischmodul gemäß Fig. 4 in Längsrichtung und
Fig. 6 eine Seitenansicht des Mischmoduls gemäß Fig. 4.

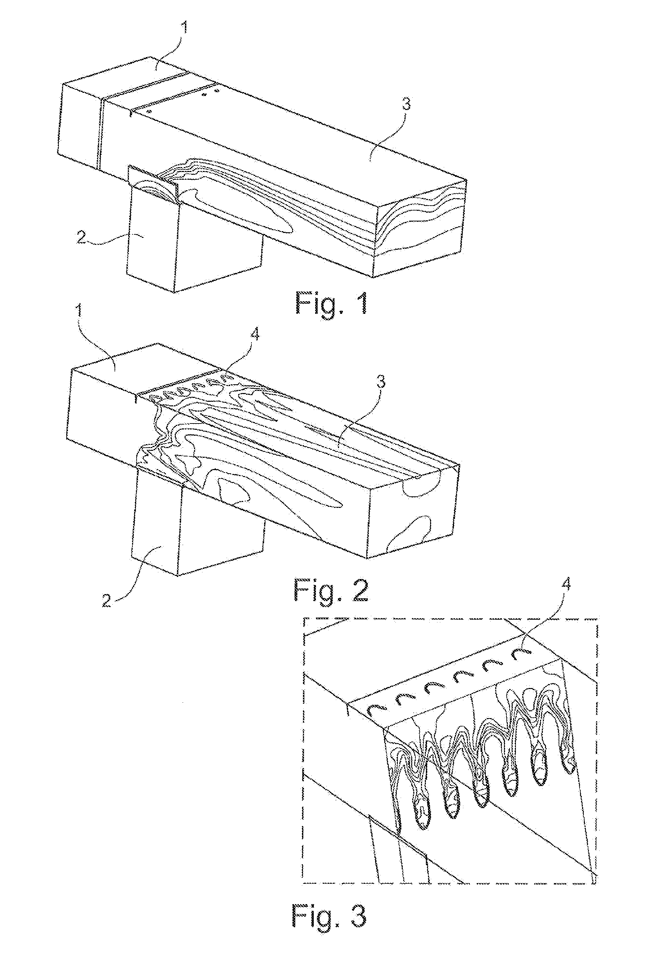

Fig. 1 zeigt in schräger Seitenansicht einen Ausschnitt aus einer Heizungs-, Belüftungs- und/oder Klima-Anlage, wie sie beispielsweise in Fahrzeugen vorgesehen sein kann und wie sie nach dem Stande der Technik üblich ist. Der Ausschnitt zeigt einen ersten Luftkanal 1, durch den ein erster Luftstrom führbar ist. Ferner verläuft im 90°-Winkel zu diesem ein zweiter Luftkanal 2, durch ein zweiter Luftstrom führbar ist und der auf den ersten Luftkanal 1 trifft. Beispielsweise kann es sich bei dem ersten Luftstrom, der durch den ersten Kanal 1 führbar ist, um einen wärmeren Luftstrom handeln und bei dem zweiten Luftstrom, der durch den zweiten Luftkanal 2 führbar ist, um einen kälteren Luftstrom.

In Anordnungen nach dem Stande der Technik treffen diese beiden Luftströme in den Bereich, in dem die Luftkanäle 1 und 2, beispielsweise in einem Winkel von 90°, aufeinandertreffen, verwirbelt, Wie Fig. 1 mittels der Trennlinien, die Übergänge zwischen Luftströmen verschiedener Temperatur andeuten, zeigt, führt diese Verwirbelung jedoch nicht zu einer optimalen Durchmischung der beiden Luftströme, so dass in einem abluftseitigen Luftkanal 3 dennoch Luftströme verschiedener Temperaturen auftreten. Diese können beispielsweise wie in Fig. 1 durch die verschiedenen dunklen bzw. hellen Felder angedeutet, in geschichteter Form auftreten.

In Fig. 2 ist eine ähnliche Darstellung eines Teils einer Heizungs-, Belüftungs- und/oder Klima-Anlage entsprechend derjenigen in Fig. 1 angedeutet. In der Darstellung gemäß Fig. 2 ist jedoch in den Mischraum, in dem der erste Lüftungskanal 1 und der zweite Lüftungskanal 2 bzw. die in diesen geführten Luftströme aufeinandertreffen, ein erfindungsgemäßes Mischmodul 4 vorgesehen.

Die unregelmäßig verlaufenden Temperatur-Trennlinien in dem abluftseitigen Luftkanal 3 gemäß Fig. 2 deuten an, dass in diesem infolge des Einsatzes des Mischmoduls 4 ein gut durchmischter Luftstrom mit gleichmäßiger Temperaturverteilung auftritt.

In Fig. 3 ist ein Ausschnitt der Darstellung gemäß Fig. 2 skizziert, in welchem der Bereich, in dem das Mischmodul angeordnet ist, vergrößert dargestellt wird. Die Darstellung gemäß Fig, 3 deutet die Verwirbelungen der beiden Luftströme im Bereich des Mischmoduls 4 an.

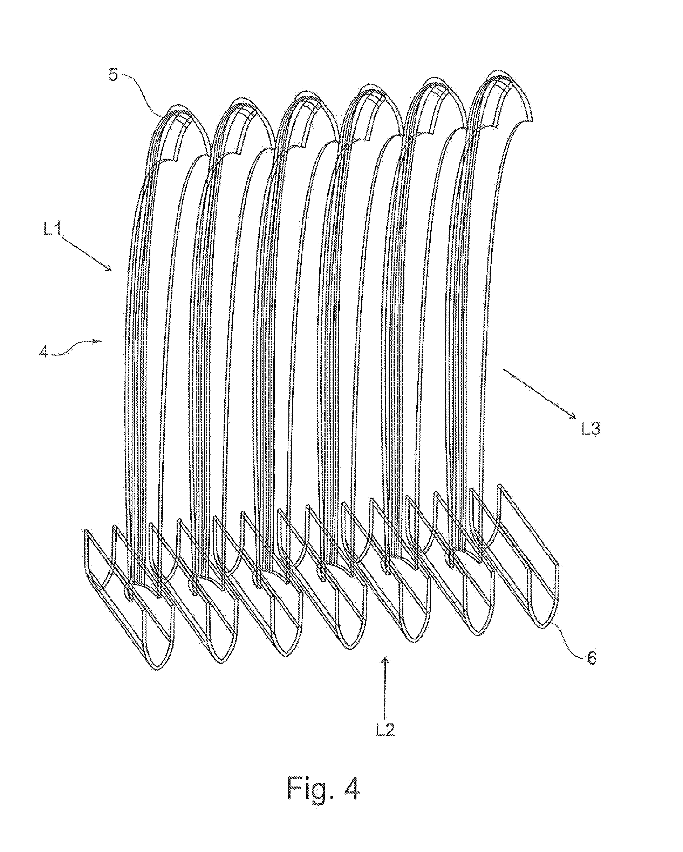

Das Mischmodul 4 wird im Folgenden anhand der Fig. 4-6 näher erläutert.

In Fig. 4 ist eine Aufsicht auf ein erfindungsgemäßes Mischmodul dargestellt.

Das Mischmodul weist mehrere im Wesentlichen parallel zueinander verlaufende V-förmige Rinnen 5 auf. Die Rinnen 5 sind zu ihrer geöffneten Seite hin parabelförmig gekrümmt.

Das Modul 4 weist in einem Basisbereich der Rinnen 5 vorgesehene V-förmige Trägerelemente 6 auf, die zwischen den ihnen zugewandten Enden der Rinnen 5 vorgesehen sind und mit ihren offenen Längsseiten den Rinnen 5 hin zugewandt sind.

Das Mischmodul 4 gemäß der Darstellung gemäß Fig. 4 ist vorteilhaft in einer Anlage bzw. einen Ausschnitt einer Anlage gemäß Fig. 2 so anordbar, dass der erste Luftstrom, der in Fig. 4 mit L1 gekennzeichnet ist, auf die geschlossene Längsseite der Rinnen 5 trifft. Der zweite Luftstrom 2 entsprechend der Darstellung gemäß Fig. 2 gelangt hingegen auf die geschlossenen Längsseiten der Trägerelemente 6; dies ist in Fig. 4 durch den Pfeil L2 gekennzeichnet.

Somit gelangt der erste Luftstrom L1, bei dem es sich beispielsweise um den relativ wärmeren Luftstrom handeln kann, zwischen den Längsseiten der Rinnen 5 hindurch in den Bereich hinter den Längsrinnen 5.

Der zweite Luftstrom L2 gelangt zwischen den Trägerelementen 6 in die Innenseiten der Rinnen 5 und wird in diesen geführt. Durch die auftretenden Luftströmungen wird in dem offenen Bereich der Rinnen 5 eine Verwirbelung der Luftströme L1 und L2 auftreten. Die so verwirbelte und durchmischte Luft wird abluftseitig als Abluftstrom L3 abgeführt.

Somit gelingt infolge der relativ großen Kontaktfläche zwischen beiden Luftströmen L1 und L2 eine optimale Durchmischung der Luftströme und somit eine gewünschte ideale Luftverteilung des Abluftstromes L3.

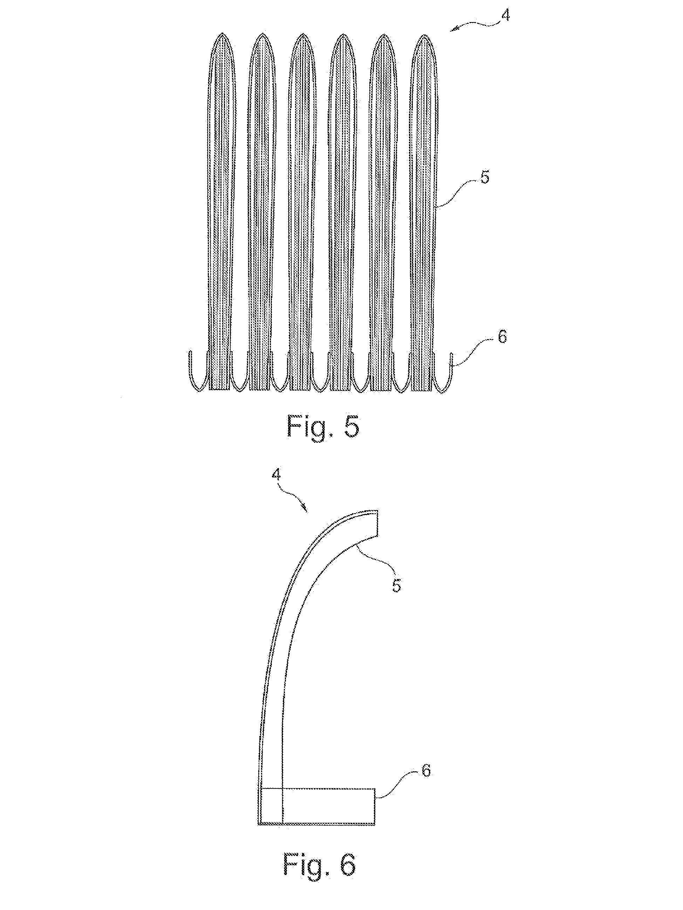

Die Darstellung gemäß Fig. 5 zeigt einen Längs-Querschnitt durch das Mischmodul entsprechend Fig. 4. Die Darstellung in Fig. 5 zeigt die längliche Ausbildung der Rinnen 5 sowie die V-förmige Ausbildung der Trägerelemente 6, Die Darstellung gemäß Fig. 5 wird deutlich, dass von unten anströmende Luft mittels der Trägerelemente 6 in die Rinnen 5 bzw. die offenen Bereiche der Rinnen 5 geführt wird.

Ferner können die Rinnen 6 vorteilhaft, wie ebenfalls in Figur 5 angedeutet, sich nach unten (zum Bereich der Trägerelemente hin) verjüngend ausgebildet sein, wodurch die Kontaktflächen der beiden Luftströme in den den Trägerelementen 6 abgewandten Bereichen der Rinnen 5 weiter vergrößert werden.

Fig. 6 zeigt in schematischer Seitenansicht ein Mischmodul 4 gemäß den Fig. 4 und 5. Die Darstellung gemäß Fig. 6 macht insbesondere die parabelförmige Ausbildung der Rinnen 5 deutlich, die zu ihrer offenen Seite hin gekrümmt sind. Dabei sollte der Gesamtwinkel dieser Krümmung 110° betragen.

Für eine optimale Dimensionierung der Rinnen 5 und der Trägerelemente 6 hat sich gezeigt, dass die V-förmigen Trägerelemente 6 wenigstens die Hälfte der Breite der Rinnen 5 aufweisen sollten. Verjüngen sich die Rinnen 5 zu den Trägerelementen 6 hin, entsprechend der Darstellung gemäß Fig. 5, so sollte der Minimalabstand der Rinnen 5 in ihrem verbreiterten Bereich wenigstens die Hälfte ihres Abstandes im Bereich der V-förmigen Trägerelemente 6 betragen. Ferner sollten für eine optimale Führungswirkung die V-förmigen Elemente 6 wenigstens so breit sein, wie der Minimalabstand der Rinnen 5 beträgt.

## Patentansprüche

1. Mischmodul (4) für eine Heizungs-, Belüftungs- und/oder Klima-Anlage, welche einen Mischraum zur Durchmischung zweier Luftströme (L1, L2) unterschiedlicher Temperatur aufweist, dadurch gekennzeichent, dass das Mischmodul (4)
mehrere, im wesentlichen parallel zueinander verlaufende Rinnen (5) aufweist und so ausgebildet und in dem Mischraum anordbar ist, dass
- die offenen Längsseiten der Rinnen (5) in Abströmrichtung in den Mischraum ragen,
- ein erster der Luftströme (L1) auf die geschlossenen Längsseiten der Rinnen (5) führbar ist
- und ein zweiter der Luftströme (L2) von wenigstens einem Ende der Rinnen (5) in diese einblasbar ist

2. Mischmodul nach Anspruch 1, **dadurch gekennzeichnet, dass** die Rinnen (5) in Abströmrichtung parabelförmig gekrümmt ausgebildet sind, vorzugsweise um einen Gesamtwinkel von etwa 10 Grad.

3. Mischmodul nach einem der Ansprüche 1 oder 2, **dadurch gekennzeichnet, dass** das Mischmodul (4) auf der Seite, auf der zweite Luftstrom (L2) in die Rinnen (5) einblasbar ist, zwischen den Rinnen (5) angeordnete V-förmige Trägerelemente (6) aufweist, welche zu den Rinnen (5) hin geöffnet sind und den zweiten Luftstrom in die Rinnen (5) lenken.

4. Mischmodul nach einem der Ansprüche 1 bis 3, **dadurch gekennzeichnet dass** die Rinnen (5) sich zu der Seite des Mischmoduls hin, an der der zweite Luftstrom (L2) einblasbar ist, verjüngen.

5. Mischmodul nach einem der Ansprüche 1 bis 4, **dadurch gekennzeichnet, dass** die wärmere Luft auf die geschlossene Längsseiten der Rinnen (5) führbar und die kältere Luft von wenigstens einem Ende der Rinnen (5) in diese einblasbar ist.

6. Mischmodul nach einem der Ansprüche 1 bis 5, **dadurch gekennzeichnet, dass** die Breite des Moduls (4) wenigstens das dreifache des Abstandes der Rinnen (5) zueinander beträgt.

7. Mischmodul nach der Anspruch 3, **dadurch gekennzeichnet, dass** die Breite der V-förmigen Trägerelemente (6) wenigstens die Hälfte der Breite der Rinnen (5) beträgt.

8. Mischmodul nach der Anspruch 4, **dadurch gekennzeichnet, dass** der Minimalabstand zwischen den Rinnen (5) wenigstens die Hälfte Ihres Abstandes im Bereich der V-förmigen Trägerelemente (6) beträgt.

9. Mischmodul nach einem der Ansprüche 1 bis 8, **dadurch gekennzeichnet, dass** die Breite der V-förmigen Trägerelemente (6) wenigstens dem Minimalabstand der Rinnen (5) entspricht.

10. Kraftfahrzeug- Heizungs-, Belüftungs- und/oder Klima-Anlage mit einem Mischmodul nach einem der Ansprüche 1 bis 9.
